# EUROPEAN PATENT APPLICATION

(11) **EP 2 752 120 A1**
(43) Date of publication of application: **09.07.2014**
(21) Application number: 12827600.3
(22) Date of filing: 28.08.2012
(51) Int. Cl.: A23L 1/22

(54) **SWEETENER HAVING SUGAR-LIKE SWEETNESS, AND FOOD AND BEVERAGE USING SAME**

(30) Priority: 30.08.2011 JP 2011186768
(71) Applicant: Mitsubishi Shoji Foodtech Co., Ltd., Chiyoda-ku Tokyo 100-0006 (JP)
(72) Inventor: OKI, Shiho, Fuji-shi Shizuoka 417-0033 (JP); SAKIMOTO, Masaki, Fuji-shi Shizuoka 417-0033 (JP)
(74) Representative: Regimbeau
(86) International application number: PCT/JP2012/071634
(87) International publication number: WO 2013/031746

(57) **Abstract**

[Problem] To provide a sweetener for obtaining a food and beverage that more closely approximates a food and beverage in which sucrose is used than a food and beverage in which sugar alcohol or an intense sweetener is used. In other words, to provide a sweetener having satisfactory sweetness similar to sucrose, and to provide a food and beverage with low saccharide or sucrose free, and having a quality of taste approximate to when sucrose is used, there being no adverse effect on the flavor of the food and beverage.

[Solution] Provided are: a sweetener having a sucrose-like sweetness, comprising sugar alcohol and/or an intense sweetener, and a yeast extract containing a peptide; and a food and beverage containing the sweetener.

## Description

### Technical Field

The present invention relates to a sweetener having sucrose-like sweet taste quality. Moreover, it relates to a food and beverage using a sweetener having sucrose-like sweet taste quality, more similar to a sucrose-added food and beverage in flavor and taste quality than the conventional sucrose free or low saccharide food and beverage.

### Background Art

In recent years, due to intentions for diet or health and due to preventing dental caries, there have seen significant advances in the area of low saccharide foods and beverages with a decreased amount of sucrose blended, or even sucrose free foods and beverages using sugar alcohol or an intense sweetener (i.e., sweetener having a high degree of sweetness) instead of sucrose.

Specifically, dextrin, which has been reportedly effective in constipation alleviation or dieting, is used for health foods, ice cream, etc., as disclosed in JP-A-11-299426 and JP-A-5-276898.

Meanwhile, it is known that sucrose-like taste quality can be obtained by use of an intense sweetener, while keeping a low-calorie diet, and that milk can give a sucrose-like rich body to beverages such as coffee, tea, etc.

### Summary of the Invention

### Problems to be Solved by the Invention

However, there has been a defect in sucrose free or low saccharide sweets or beverages that their taste quality is rather plain as compared with those using sucrose.

Dextrin also has a defect of high-calorie equivalent to sucrose, from the viewpoint of a calorie-free or low-calorie diet.

Moreover, foods and beverages, when using intense sweeteners, may lose their flavor due to the aftertaste peculiar to the sweeteners, while milk, when added to enrich body, may deprive coffee and tea of their flavor depending on the amount of milk added. In other words, the flavor original to foods and beverages can be traded away by their body enriched by milk.

In addition, there has been a defect that milk cannot be used to enrich the body of foods and beverages requiring their clarity.

### Means to Solve the Problems

The present inventors have earnestly researched to solve the above problems, and newly found that a sweetener having a sweet taste quality equivalent to or better than sucrose can be obtained by blending a yeast extract to one or more of sugar alcohols and intense sweeteners, resulting in the completion of the present invention. Further, the present inventors have found that, when the above sweetener is applied to foods and beverages, the better similarity to sucrose in flavor and taste quality can be obtained, than in the case of using a sugar alcohol or an intense sweetener singly.

Thus, in the first aspect, the present invention relates to a sweetener having a sucrose-like sweet taste quality, comprising a sugar alcohol and/or an intense sweetener and a yeast extract.

In the second aspect, the present invention relates to the sweetener according to the above first aspect, wherein the yeast extract contains a peptide.

In the third aspect, the present invention relates to the sweetener according to the above first or second aspect, wherein the yeast extract contains a peptide of 10% or more.

In the fourth aspect, the present invention relates to the sweetener according to any one of the above first to third aspects, wherein the yeast extract contains a sodium chloride content of 7% or less, a nucleic acid of 17% or less and a free amino acid of 7% or less.

In the fifth aspect, the present invention relates to a food comprising the sweetener according to any one of the above first to fourth aspects.

In the sixth aspect, the present invention relates to a beverage comprising the sweetener according to any one of the above first to fourth aspects.

The sugar alcohol usable in the present invention includes maltitol, xylitol, erythritol, sorbitol, mannitol, lactitol, hydrogenated isomaltulose, and hydrogenated starch hydrolysate. Two or more of these sugar alcohols may be combined to be used. Among these sugar alcohols, maltitol is particularly preferably used in the present invention.

The intense sweetener usable in the present invention includes sucralose, acesulfame potassium, glycyrrhizin, stevia extract, enzymatically treated stevia, aspartame, and neotame. Two or more of these intense sweeteners may be combined to be used in the present invention. Among these intense sweeteners, sucralose or acesulfame potassium is particularly preferably used in the present invention.

Moreover, the sugar alcohol and the intense sweetener may be combined with each other to be used in the present invention.

In the present invention, any yeast extract may be used, when it contains a peptide. That is, any yeast extract may be used, when it contains a peptide of more than 0%. Preferably, the yeast extract contains a peptide of 10% or more. When the yeast extract contains a peptide of 20% or more, the yeast extract will enable the production of a sweetener contributing to even better sweet taste quality. In the present application, "%" indicates "by weight percent", unless otherwise specified.

Meanwhile, in the present invention, the yeast extract should preferably be free from sodium chloride, nucleic acids or free amino acids if at all possible. More specifically, the yeast extract should advantageously contains sodium chloride of 7% or less, preferably 3% or less, more preferably less than 1%; nucleic acids of 17% or less, preferably 15% or less, more preferably 12% or less; and free amino acids of 7% or less, preferably 3% or less. The reasons for these small amounts are that, when these components are contained at a large amount, strong salty or umami taste resulted from the large amounts of such components undesirably degrades the flavor of the final product, as compared to foods and beverages using sucrose.

In the sweetener equivalent to sucrose in sweet taste quality, an amount of the yeast extract blended should be preferably 0.0001 to 0.1, more preferably 0.001 to 0.005, per 1 of the sugar alcohol. The present invention cannot be effective, when the amount of the yeast extract blended is less than 0. 0001, the effect of the present invention may not be obtained. When the amount exceeds 0.1, the influence of the yeast extract is too strong to obtain the good sweet taste quality.

Meanwhile, in a food and beverage, when the sugar alcohol or the intense sweetener is blended so as to make the sweetness equivalent to sucrose, an amount of the yeast extract blended may be 0.0005% to 1% per the food or beverage, even though the amount depends on the components or taste depth of the food and beverage.

The sweetener of the present invention can be used as a sucrose substitute, without particular restriction, in foods and beverages if the foods and beverages may contain sucrose. For examples, such foods and beverages include chocolates, ice creams, candies, chewing gums, coffees, carbonated drinks, refreshing drinks, sports drinks, and cookies.

Advantageous Effects of the Invention

The present invention can provide a sweetener equivalent to sucrose in the good sweet taste quality. Further, the present invention can provide a low saccharide or sucrose free food and beverage, without degrading the flavor of the food and beverage while having the taste quality similar to that of a food and beverage using sucrose. In the present invention, the term "low saccharide" means a monosaccharide and disaccharide content of 5 g or less per 100 g of a food, or 2.5 g or less per 100 ml of a beverage, and the term "sucrose free" means containing no sucrose, or using no sucrose when processed.

### Embodiments for Carrying out the Invention

The present invention will be explained below in detail, showing some examples herein below, but the present invention will not be limited only to those examples.

The yeast extracts used in the following examples were all manufactured by KOHJIN Life Science Co., Ltd. (former KOHJIN Co., Ltd.). Yeast Extract A contains 22% peptide,72% carbohydrates, 4% water, less than 1% sodium chloride, less than 1% nucleic acid, and less than 1% free amino acid; Yeast Extract B is a product named "Aromild G" containing 22% peptide, less than 1% sodium chloride, 11% nucleic acid, and 2% free amino acid; Yeast Extract C is a product named "Ajirex LK" containing 13% peptide, 5% sodium chloride, 15% nucleic acid, and 5% free amino acid; and Yeast Extract D is a product named "Aromild" containing 8% peptide, 10% sodium chloride, 20% nucleic acid, and 8% free amino acid. The examples herein below using Yeast Extract D are not related to the present invention.

The term "Lesys Fine Powder" used in the examples is the name of a product of Mitsubishi Shoji Foodtech Co., Ltd., and contains 99.5% maltitol. The term "Amalty MR-50" is also the name of a product of Mitsubishi Shoji Foodtech Co., Ltd., and contains 96.0% maltitol. The terms "PO-40", "PO-60", "Mild Syrup" and "Amameal" used in the examples are hydrogenated starch hydrolysates, and the names of products of Mitsubishi Shoji Foodtech Co., Ltd. The term "Sorbit LTS-P" is the name of a product of Mitsubishi Shoji Foodtech Co., Ltd., and contains 99.0% sorbitol. Polydextrose used in the examples is a product named "Litesse III" of Danisco Japan Ltd.

### Example 1

Aqueous solutions were prepared as prescribed in Table 1.

**[Table 1]**

| Components blended in aqueous solutions (unit: g) | | | |
|---|---|---|---|
| | Sucrose aqueous solution | Lesys aqueous solution | Lesys aqueous solution |
| | | | +Yeast Extract A |
| Sucrose | 10 | | |
| Lesys Fine Powder | | 12 | 12 |
| 1% Yeast Extract A | | | 3 |
| Water | 90 | 88 | 85 |

The final concentration of Yeast Extract A in the solution was 0.03%, since 3 g of 1% aqueous solution was blended. The amounts of sucrose and Lesys Fine Powder blended were set so as to keep sweetness equivalent to each other.

Six panels tasted the above aqueous solution samples, and compared the aqueous solution containing only the sugar alcohol with the aqueous solution containing the sugar alcohol together with the yeast extract to select one more similar to the sucrose aqueous solution in the sweet taste quality. The obtained results are shown in Table 2.

**[Table 2]**

| Evaluation results | | |
|---|---|---|
| | Sugar alcohol | Sugar alcohol |
| | | + Yeast Extract A |
| The number of panels having selected | 0 | 6 |

From the above results, it is revealed that the sample of the sugar alcohol blended together with Yeast Extract A was more similar to the sample of sucrose in sweet taste quality.

### Example 2

Aqueous solutions were prepared as prescribed in Table 3.

**[Table 3]**

| Components blended in aqueous solutions (unit: g) | | | |
|---|---|---|---|
| | Sucrose aqueous solution | Sorbitol aqueous solution | Sorbitol aqueous solution |
| | | | + Yeast Extract A |
| Sucrose | 10 | | |
| Sorbit LTS-P | | 14.3 | 14.3 |
| 1% Yeast Extract A | | | 3 |
| Water | 90 | 85.7 | 82.7 |

The final concentration of Yeast Extract A in the aqueous solution was 0.03%, since 3 g of 1% aqueous solution was blended. The amounts of sucrose and sorbitol blended were set so as to keep sweetness equivalent to each other.

Six panels tasted the above aqueous solution samples, and compared the aqueous solution containing only the sugar alcohol with the solution containing the sugar alcohol together with the yeast extract to select one more similar to the sucrose aqueous solution in the sweet taste quality. The obtained results are shown in Table 4.

**[Table 4]**

| Evaluation results | | |
|---|---|---|
| | Sugar alcohol | Sugar alcohol |
| | | + Yeast Extract A |
| The number of panels having selected | 1 | 5 |

From the above results, it is revealed that the sample of the sugar alcohol blended together with Yeast Extract A was more similar to the sample of sucrose in sweet taste quality.

### Example 3

Aqueous solutions were been prepared as prescribed in Table 5.

**[Table 5]**

| Components blended in aqueous solutions (unit: g) | | | |
|---|---|---|---|
| | Sucrose aqueous solution | PO-60 aqueous solution | PO-60 aqueous solution |
| | | | + Yeast Extract A |
| Sucrose | 10 | | |
| PO-60 | | 16.7 | 16.7 |
| 1% Yeast Extract A | | | 3 |
| Water | 90 | 83.3 | 80.3 |

The final concentration of Yeast Extract A in the aqueous solution was 0.03%, since 3 g of 1% aqueous solution was blended. The amounts of sucrose and PO-60 blended were set so as to keep sweetness equivalent to each other.

Eight panels tasted the above aqueous solution samples, and compared the aqueous solution containing only the sugar alcohol with the aqueous solution containing the sugar alcohol together with the yeast extract to select one more similar to the sucrose aqueous in the sweet taste quality. The obtained results are shown in Table 6.

**[Table 6]**

| Evaluation results | | |
|---|---|---|
| | Sugar alcohol | Sugar alcohol |
| | | + Yeast Extract A |
| The number of panels having selected | 3 | 5 |

From the above results, it is revealed that the sample of the sugar alcohol blended together with Yeast Extract A was more similar to the sample of sucrose in sweet taste quality.

### Example 4

Aqueous solutions were prepared as prescribed in Table 7.

**[Table 7]**

| Components blended in aqueous solutions (unit: g) | | | | | | |
|---|---|---|---|---|---|---|
| | Sucrose aqueous solution | Sugar alcohol aqueous solution | Sugar alcohol aqueous solution | Sugar alcohol aqueous solution | Sugar alcohol aqueous solution | Sugar alcohol aqueous solution |
| | | | + Yeast Extract A | + Yeast Extract B | + Yeast Extract C | + Yeast Extract D |
| Sucrose | 10 | | | | | |
| Lesys Fine Powder | | 12 | 12 | 12 | 12 | 12 |
| 1% Yeast Extract A | | | 3 | | | |
| 1% Yeast Extract B | | | | 3 | | |
| 1% Yeast Extract C | | | | | 3 | |
| 1% Yeast Extract D | | | | | | 3 |
| Water | 90 | 88 | 85 | 85 | 85 | 85 |

The final concentration of each of the Yeast Extracts in the solutions was 0.03%, since 3 g of 1% aqueous solution was blended. The amounts of sucrose and Lesys Fine Power blended were set so as to keep sweetness equivalent to each other.

Six panels tasted the above aqueous solution samples, and ranked them in sweet taste quality. When they were equivalent in the sweet taste quality, they were ranked equivalent. The obtained results are shown in Table 8.

**[Table 8]**

| Evaluation results | | | | | | |
|---|---|---|---|---|---|---|
| | Sucrose | Sugar alcohol | Sugar alcohol | Sugar alcohol | Sugar alcohol | Sugar alcohol |
| | | | + Yeast Extract A | + Yeast Extract B | + Yeast Extract C | + Yeast Extract D |
| The number of panels having ranked first place | 3 | 0 | 3 | 2 | 0 | 0 |
| The number of panels having ranked second place | 1 | 0 | 2 | 3 | 1 | 0 |
| The number of panels having ranked third place | 2 | 0 | 1 | 1 | 0 | 0 |
| The number of panels having ranked fourth place | 0 | 2 | 0 | 0 | 3 | 1 |
| The number of panels having ranked fifth place | 0 | 2 | 0 | 0 | 2 | 3 |
| The number of panels having ranked sixth place | 0 | 2 | 0 | 0 | 0 | 2 |
| Average ranking | 1.8 | 5.0 | 1.7 | 1.8 | 4.0 | 5.2 |

From the above results, it is revealed that the sample of the sugar alcohol blended together with Yeast Extract A or Yeast Extract B was equivalent to or better than the sample of sucrose in sweet taste quality.

### [Example 5]

Milk solutions were prepared as prescribed in Table 9.

**[Table 9]**

| Components blended in milk solutions (unit: g) | | | | | | |
|---|---|---|---|---|---|---|
| | Sucrose milk solution | Sugar alcohol milk solution | Sugar alcohol milk solution | Sugar alcohol milk solution | Sugar alcohol milk solution | Sugar alcohol milk solution |
| | | | + Yeast Extract A | + Yeast Extract B | + Yeast Extract C | Yeast Extract D |
| Sucrose | 10 | | | | | |
| Lesys Fine Powder | | 12 | 12 | 12 | 12 | 12 |
| 1% Yeast Extract A | | | 3 | | | |
| 1% Yeast Extract B | | | | 3 | | |
| 1% Yeast Extract C | | | | | 3 | |
| 1% Yeast Extract D | | | | | | 3 |
| Milk | 90 | 88 | 85 | 85 | 87 | 85 |

The final concentration of each of the Yeast Extracts in the milk solutions was 0.03%, since 3 g of 1% aqueous solution was blended. The amounts of sucrose and Lesys Fine Power blended were set so as to keep sweetness equivalent to each other.

Six panels tasted the above milk solution samples, and ranked them in flavor and taste quality. When they were equivalent in the flavor and taste quality, they were ranked equivalent. The obtained results are shown in Table 10.

**[Table 10]**

| Evaluation results | | | | | | |
|---|---|---|---|---|---|---|
| | Sucrose | Sugar alcohol | Sugar alcohol | Sugar alcohol | Sugar alcohol | Sugar alcohol |
| | | | + Yeast Extract A | + Yeast Extract B | + Yeast Extract C | + Yeast Extract D |
| The number of panels having ranked first place | 3 | 0 | 4 | 2 | 0 | 0 |
| The number of panels having ranked second place | 2 | 0 | 0 | 0 | 2 | 0 |
| The number of panels having ranked third place | 1 | 2 | 1 | 2 | 0 | 0 |
| The number of panels having ranked fourth place | 0 | 1 | 1 | 1 | 2 | 1 |
| The number of panels having ranked fifth place | 0 | 3 | 0 | 1 | 1 | 1 |
| The number of panels having ranked sixth place | 0 | 0 | 0 | 0 | 1 | 4 |
| Average ranking | 1.7 | 4.2 | 1.8 | 2.8 | 3.8 | 5.5 |

From the above results, it is revealed that the sample of the sugar alcohol blended together with Yeast Extract C was more similar in flavor and taste quality to the sample of sucrose, than the sample of the sugar alcohol only; the sample of the sugar alcohol blended together with Yeast Extract B was even more similar in flavor and taste quality to the sample of sucrose; and the sample of the sugar alcohol blended together with Yeast Extract A was equivalent in flavor and taste quality to the sample of sucrose.

### Example 6

Milk chocolates were prepared as prescribed in Table 11.

**[Table 11]**

| Components in milk chocolates (unit: part by weight) | | | | | | |
|---|---|---|---|---|---|---|
| Materials | Sucrose chocolate | Sugar alcohol chocolate 1 | Sugar alcohol chocolate 2 | Sugar alcohol chocolate 3 | Sugar alcohol chocolate 4 | Sugar alcohol chocolate 5 |
| | using sucrose | using sugar alcohol | using sugar alcohol | using sugar alcohol | using sugar alcohol | using sugar alcohol |
| | | | + Yeast Extract A | + Yeast Extract B | + Yeast Extract C | + Yeast Extract D |
| Powdered sucrose | 42.77 | | | | | |
| Lesys Fine Powder | | 42.77 | 42.77 | 42.77 | 42.77 | 42.77 |
| Cocoa butter | 19.50 | 19.50 | 19.50 | 19.50 | 19.50 | 19.50 |
| Cocoa mass | 14.95 | 14.95 | 14.95 | 14.95 | 14.95 | 14.95 |
| Whole milk powder | 17.46 | 17.46 | 17.46 | 17.46 | 17.46 | 17.46 |
| Whey powder | 4.93 | 4.93 | 4.93 | 4.93 | 4.93 | 4.93 |
| Lecithin | 0.39 | 0.39 | 0.39 | 0.39 | 0.39 | 0.39 |
| Total | 100.00 | 100.00 | 100.00 | 100.00 | 100.00 | 100.00 |
| Yeast Extract A | | | 0.05 | | | |
| Yeast Extract B | | | | 0.03 | | |
| Yeast Extract C | | | | | 0.03 | |
| Yeast Extract D | | | | | | 0.03 |

In the present example, the Yeast Extracts were added by outer percentage.

Eight panels tasted the above milk chocolate samples, and ranked them in flavor and taste quality. When they were equivalent in the flavor and taste quality, they were ranked equivalent. The obtained results are shown in Table 12.

**[Table 12]**

| Evaluation results | | | | | | |
|---|---|---|---|---|---|---|
| | Sucrose | Sugar alcohol | Sugar alcohol | Sugar alcohol | Sugar alcohol | Sugar alcohol |
| | | | + Yeast Extract A | + Yeast Extract B | + Yeast Extract C | + Yeast Extract D |
| The number of panels having ranked first place | 8 | 0 | 0 | 0 | 0 | 0 |
| The number of panels having ranked second place | 0 | 0 | 4 | 2 | 2 | 0 |
| The number of panels having ranked third place | 0 | 0 | 1 | 5 | 2 | 0 |
| The number of panels having ranked fourth place | 0 | 0 | 3 | 1 | 4 | 0 |
| The number of panels having ranked fifth place | 0 | 5 | 0 | 0 | 0 | 3 |
| The number of panels having ranked sixth place | 0 | 3 | 0 | 0 | 0 | 5 |
| Average ranking | 1.0 | 5.4 | 2.9 | 2.9 | 3.3 | 5.6 |

From the above results, it is revealed that the sample of the sugar alcohol blended together with Yeast Extract C was more similar in flavor and taste quality to the sample of sucrose, than the sample of the sugar alcohol only; and the sample of the sugar alcohol blended together with Yeast Extract A or Yeast Extract B was even more similar in flavor and taste quality to the sample of sucrose.

### Example 7

Milk coffees blended with the sugar alcohol were prepared as prescribed in Table 13.

**[Table 13]**

| Components in milk coffees blended with sugar alcohol (unit: g) | | | | | | |
|---|---|---|---|---|---|---|
| Materials | Sucrose-blen ded coffee | Sugar alcohol-blended coffee 1 | Sugar alcohol-blended coffee 2 | Sugar alcohol-blended coffee 3 | Sugar alcohol-blended coffee 4 | Sugar alcohol-blended coffee 5 |
| | using sucrose | using sugar alcohol | using sugar alcohol | using sugar alcohol | using sugar alcohol | using sugar alcohol |
| | | | + Yeast Extract A | + Yeast Extract B | + Yeast Extract C | + Yeast Extract D |
| Coffee extract solution 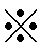 | 50.00 | 50.00 | 50.00 | 50.00 | 50.00 | 50.00 |
| Milk solution | 10.00 | 10.00 | 10.00 | 10.00 | 10.00 | 10.00 |
| Sucrose | 4.00 | | | | | |
| Amalty MR-50 | | 5.00 | 5.00 | 5.00 | 5.00 | 5.00 |
| Yeast Extract A | | | 0.02 | | | |
| Yeast Extract B | | | | 0.02 | | |
| Yeast Extract C | | | | | 0.02 | |
| Yeast Extract D | | | | | | 0.02 |
| Purified water | Diluted in measuring cylinder up to 100 ml | | | | | |

| | | | | | | |
|---|---|---|---|---|---|---|
| 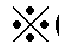 Coffee extract solution: 4 g of commercially available coffee beans extracted with 60 g of boiling water | | | | | | |

The amounts of sucrose and Amalty MR-50 blended was set so as to keep sweetness equivalent to each other.

Eight panels tasted the above milk coffee samples, and ranked them in flavor and taste quality. When they were equivalent in the flavor and taste quality, they were ranked equivalent. The obtained results are shown in Table 14.

**[Table 14]**

| Evaluation results | | | | | | |
|---|---|---|---|---|---|---|
| | Sucrose | Sugar alcohol | Sugar alcohol | Sugar alcohol | Sugar alcohol | Sugar alcohol |
| | | | + Yeast Extract A | + Yeast Extract B | + Yeast Extract C | + Yeast Extract D |
| The number of panels having ranked first place | 8 | 0 | 0 | 0 | 0 | 0 |
| The number of panels having ranked second place | 0 | 0 | 5 | 2 | 1 | 0 |
| The number of panels having ranked third place | 0 | 0 | 2 | 5 | 1 | 0 |
| The number of panels having ranked fourth place | 0 | 0 | 1 | 1 | 6 | 0 |
| The number of panels having ranked fifth place | 0 | 8 | 0 | 0 | 0 | 0 |
| The number of panels having ranked sixth place | 0 | 0 | 0 | 0 | 0 | 8 |
| Average ranking | 1.0 | 5.0 | 2.5 | 2.9 | 3.6 | 6.0 |

From the above results, it is revealed that the sample of the sugar alcohol blended together with Yeast Extract C was more similar in flavor and taste quality to the sample of sucrose, than the sample of the sugar alcohol only; and the sample of the sugar alcohol blended together with Yeast Extract A or Yeast Extract B was even more similar in flavor and taste quality to the sample of sucrose.

### Example 8

Milk coffees blended with the intense sweetener were prepared as prescribed in Table 15.

**[Table 15]**

| Components in milk coffees blended with intense sweetener (unit: g) | | | | |
|---|---|---|---|---|
| Ingredients | Sucrose-blended coffee | Intense sweetener-blended coffee 1 | Intense sweetener-blended coffee 2 | Intense sweetener-blended coffee 3 |
| | using sucrose | using intense sweetener | using intense sweetener | using intense sweetener |
| | | | + Yeast Extract A | + Yeast Extract B |
| Coffee extract solution 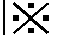 | 50.00 | 50.00 | 50.00 | 50.00 |
| Milk solution | 10.00 | 10.00 | 10.00 | 10.00 |
| Sucrose | 4.00 | | | |
| Acesulfame K | | 0.01 | 0.01 | 0.01 |
| Sucralose | | 0.0033 | 0.0033 | 0.0033 |
| Yeast extract A | | | 0.02 | |
| Yeast extract B | | | | 0.02 |
| Purified water | Diluted in measuring cylinder up to 100 ml | | | |

| | | | | |
|---|---|---|---|---|
| 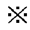 Coffee extract solution: 4 g of commercially available coffee beans extracted with 60 g of boiling water | | | | |

The amounts of sucrose and intense sweetener blended were set so as to keep sweetness equivalent to each other. The intense sweeteners, acesulfame potassium and sucralose, were blended at a ratio of 1:1 in sweetness.

Eight panels tasted the above milk coffee samples, and ranked them in flavor and taste quality. When they were equivalent in the flavor and taste quality, they were ranked equivalent. The obtained results are shown in Table 16.

**[Table 16]**

| Evaluation results | | | | |
|---|---|---|---|---|
| | Sucrose | Intense sweetener | Intense sweetener | Intense sweetener |
| | | | + Yeast Extract A | + Yeast Extract B |
| The number of panels having ranked first place | 8 | 0 | 0 | 0 |
| The number of panels having ranked second place | 0 | 0 | 7 | 1 |
| The number of panels having ranked third place | 0 | 0 | 1 | 7 |
| The number of panels having ranked fourth place | 0 | 8 | 0 | 0 |
| Average ranking | 1.0 | 4.0 | 2.1 | 2.9 |

From the above results, it is revealed that the sample of the intense sweetener together with Yeast Extract B was more similar in flavor and taste quality to the sample of sucrose, than the sample of the intense sweetener only; and the sample of the intense sweetener blended together with Yeast Extract A was even more similar in flavor and taste quality to the sample of sucrose.

### Example 9

Red bean pastes blended with sugar alcohol were prepared as prescribed in Table 17. Yeast Extract (A+B) is a mixture of Yeast Extract A and Yeast Extract B mixed at a ratio by weight of 1:1.

**[Table 17]**

| Components in red bean pastes blended with sugar alcohol (unit: g) | | | | |
|---|---|---|---|---|
| | Sucrose | Sugar alcohol | Sugar alcohol | Sugar alcohol |
| | | | + Yeast Extract (A+B) | + Yeast Extract D |
| Unsweetened red bean paste | 1000 | 1000 | 1000 | 1000 |
| Sucrose | 600 | - | - | - |
| Litesse III | - | 368.6 | 368.6 | 368.6 |
| Mild Syrup | - | 488.6 | 488.6 | 488.6 |
| Yeast Extract | - | - | 1.9 | 1.9 |

The final concentration of each of the Year Extracts was 0.1%.

Eight panels tasted the above red bean paste samples, and ranked them in sweet taste quality. When they were equivalent in the sweet taste quality, they were ranked equivalent. The obtained results are shown in Table 18.

**[Table 18]**

| Evaluation results | | | | |
|---|---|---|---|---|
| | Sucrose | Sugar alcohol | Sugar alcohol | Sugar alcohol |
| | | | + Yeast Extract (A+B) | + Yeast Extract D |
| The number of panels having ranked first place | 3 | 1 | 4 | 0 |
| The number of panels having ranked second place | 4 | 1 | 3 | 0 |
| The number of panels having ranked third place | 1 | 6 | 1 | 0 |
| The number of panels having ranked fourth place | 0 | 0 | 0 | 8 |
| Average ranking | 1.8 | 2.6 | 1.6 | 4.0 |

From the above results, it is revealed that the sample of the sugar alcohol blended together with the mixture of Yeast Extract A and Yeast Extract B was equivalent to or better than the sample of sucrose in sweet taste quality.

### Example 10

Milk puddings blended with sugar alcohol were prepared as prescribed in Table 19. Yeast Extract (A+B) is a mixture of Yeast Extract A and Yeast Extract B mixed at a ratio by weight of 1:1.

**[Table 19]**

| Components in milk puddings blended with sugar alcohol (unit: g) | | | | |
|---|---|---|---|---|
| | Sucrose | Sugar alcohol | Sugar alcohol | Sugar alcohol |
| | | | + Yeast Extract (A+B) | + Yeast Extract D |
| Sucrose | 10 | - | - | - |
| Lesys Fine Powder | - | 10 | 10 | 10 |
| Gelating agent | 0.8 | 0.8 | 0.8 | 0.8 |
| Skim milk powder | 3 | 3 | 3 | 3 |
| Fresh cream | 10 | 10 | 10 | 10 |
| Fresh cream (Vegetable oil) | 10 | 10 | 10 | 10 |
| Water | 66.2 | 66.2 | 66.2 | 66.2 |
| Yeast extract | - | - | 0.05 | 0.05 |

The final concentration of each of the Year Extracts was 0.05%.

Seven panels tasted the above milk pudding samples, and ranked them in sweet taste quality. When they were equivalent in the sweet taste quality, they were ranked equivalent. The obtained results are shown in Table 20.

**[Table 20]**

| Evaluation results | | | | |
|---|---|---|---|---|
| | Sucrose | Sugar alcohol | Sugar alcohol | Sugar alcohol |
| | | | + Yeast Extract (A+B) | + Yeast Extract D |
| The number of panels having ranked first place | 7 | 0 | 0 | 7 |
| The number of panels having ranked second place | 0 | 2 | 5 | 0 |
| The number of panels having ranked third place | 0 | 5 | 2 | 0 |
| The number of panels having ranked fourth place | 0 | 0 | 0 | 0 |
| Average ranking | 1.0 | 2.7 | 2.3 | 4.0 |

From the above results, it is revealed that the sample of the sugar alcohol blended together with the mixture of Yeast Extract A and Yeast Extract B was similar to the sample of sucrose in flavor and taste quality.

### Example 11

Whipped creams blended with sugar alcohol were prepared as prescribed in Table 21. Yeast Extract (A+B) is a mixture of Yeast Extract A and Yeast Extract B mixed at a ratio by weight of 1:1.

**[Table 21]**

| Components in whipped creams blended with sugar alcohol (unit: g) | | | | |
|---|---|---|---|---|
| | Sucrose | Sugar alcohol | Sugar alcohol | Sugar alcohol |
| | | | + Yeast Extract (A+B) | + Yeast Extract D |
| Sucrose | 20 | - | - | - |
| Water | 8.6 | - | - | - |
| Amameal | - | 28.6 | 28.6 | 28.6 |
| Fresh cream (Vegetable oil) | 195 | 195 | 195 | 195 |
| Yeast extract | - | - | 0.05 | 0.05 |

The final concentration of each of the Yeast Extracts was 0.02%.

Six panels tasted the above whipped cream samples, and ranked them in sweet taste quality. When they were equivalent in the sweet taste quality, they were ranked equivalent. The obtained results are shown in Table 22.

**[Table 22]**

| Evaluation results | | | | |
|---|---|---|---|---|
| | Sucrose | Sugar alcohol | Sugar alcohol | Sugar alcohol |
| | | | + Yeast Extract (A+B) | + Yeast Extract D |
| The number of panels having ranked first place | 6 | 0 | 1 | 0 |
| The number of panels having ranked second place | 0 | 2 | 4 | 0 |
| The number of panels having ranked third place | 1 | 4 | 1 | 0 |
| The number of panels having ranked fourth place | 0 | 0 | 0 | 6 |
| Average ranking | 1.3 | 2.7 | 2.0 | 4.0 |

From the above results, it is revealed that the sample of the sugar alcohol blended together with the mixture of Yeast Extract A and Yeast Extract B was similar to the sample of sucrose in flavor and taste quality.

### Prior Art Documents

### Patent Documents

Patent Document 1: JP-A-11-299426
Patent Document 2: JP-A-5-276898

## Claims

1. A sweetener having sucrose-like sweet taste quality, comprising a sugar alcohol and/or an intense sweetener and a yeast extract.

2. The sweetener according to claim 1, wherein the yeast extract contains a peptide.

3. The sweetener according to claim 1 or 2, wherein the yeast extract contains a peptide of 10% or more.

4. The sweetener according to any one of claims 1 to 3, wherein the yeast extract contains sodium chloride of 7% or less, nucleic acids of 17% or less and free amino acids of 7% or less.

5. A food comprising the sweetener according to any one of claims 1 to 4.

6. A beverage comprising the sweetener according to any one of claims 1 to 4.
